# EUROPEAN PATENT SPECIFICATION

(11) **EP 4 413 303 B1**
(45) Date of publication and mention of the grant of the patent: **03.09.2025**
(21) Application number: 22797383.1
(22) Date of filing: 04.10.2022
(51) Int. Cl.: F24F 11/46, F24F 11/62, F24F 11/72, F24F 11/74, F24F 11/84, F24F 11/85, F24D 19/10, F04D 15/00, F04D 15/02, G05D 7/06

(54) **FLUID TRANSPORTATION NETWORK AND METHOD**
FLÜSSIGKEITSTRANSPORTNETZ UND VERFAHREN
RÉSEAU DE TRANSPORT DE FLUIDES ET MÉTHODE

(30) Priority: 07.10.2021 CH 0703612021
(43) Date of publication of application: 14.08.2024
(73) Proprietor: Belimo Holding AG, 8340 Hinwil (CH)
(72) Inventor: BROOKS, Andy, 8640 Rapperswil (CH); KELLER, Urs, 8340 Hinwil (CH); ALLENSPACH, Andreas, 8406 Winterthur (CH)
(74) Representative: Rentsch Partner AG
(86) International application number: PCT/EP2022/077501
(87) International publication number: WO 2023/057409

(56) References cited:
- EP-A1- 1 163 478
- EP-B1- 1 163 478
- JP-A- 2013 204 833
- JP-A- 2018 136 109

## Description

### Field of the Disclosure

The present disclosure relates to a fluid transportation network and a method for controlling the fluid transportation network. In particular, the present invention as defined in the appended claims relates to a fluid transportation network and a method for controlling the fluid transportation network which comprises one or more parallel zones, whereby each zone is connected to a common supply line.

### Background

Fluid transportation systems and networks typically comprise a plurality of consumers in different zones, with parallel branches or lines, through which a liquid or gaseous fluid is transported, for example in Heating, Ventilating, and Air Conditioning (HVAC) system for distributing thermal energy. The consumers and zones typically have different designs, with different diameters and/or lengths of fluid transport lines, for example, pipes, ducts and other and conduits, and have different and/or varying flow rates and/or throughput. In order to achieve a balanced and/or controlled distribution of the fluid to the consumers in such fluid transport systems, the zones and/or consumers are provided with flow control valves, for example actuated valves with electric motors, configured to adjust the flow through the respective consumer at different degrees of opening and/or valve positions.

In fluid transportation systems, centrifugal pumps provide the main force to drive and move fluid through fluid transportation lines, e.g. pipes, cooling and heating equipment, such as chillers, boilers, and consumers, such as thermal energy exchangers, e.g. heat exchanger or radiators. Traditionally, the centrifugal pumps are located in a central location with the cooling or heating equipment. Different types of valves such as control valves and balancing valves are installed in the fluid transportation systems in order to set and control the flow of fluid, thereby creating pressure drops and power losses across the valves. The central distribution pumps are usually chosen between constant speed pumps or variable speed pumps. However, the described systems suffer from excessive energy consumption and lack of efficiency.

As an alternative to systems using central pumps, systems using distributed pumping schemes using variable speed pumps have been proposed. Decentralized pumping systems may require less pumping power and, thus, have a lower energy consumption than central pumping systems. Known as variable speed pumping systems, they can be arranged in variable-primary pumping arrangement, primary-secondary pumping arrangement, or primary-secondary-tertiary pumping arrangement. For example, in the variable-primary pumping arrangement, the primary pumps have variable speed.

GB2245967A discloses an air conditioning system which includes a plurality of independently controlled air-to-water heat exchangers or groups of heat exchangers for heating or cooling air before circulation. Means are provided for supplying hot or cold water to the heat exchangers together with a plurality of variable speed pumps. Each variable speed pump has the function of varying the flow rate of the water supply through one independently controlled heat exchanger or group of heat exchangers according to the required temperature of the air.

US6607141 B2 discloses decentralized centrifugal pumps with variable speed drives located at cooling or heating coils which are utilized to circulate and control the flow of liquid through the coils, main supply line, and main return line. The pump speed is controlled to satisfy temperature or pressure settings of a control agent served by the coil.

Central distribution pumps, modulating control valves, and balancing valves are no longer required to circulate and control the flow.

JP2018136109 which discloses the features of the preamble of claim 1, relates to an air conditioning system including air conditioning contro means which perform individual flow amount control controlling a flow amount of a heat medium on the basis of thermal load in each of a plurality of heat exchangers for air conditioning arranged in each of a plurality of individual distribution duct lines.

### Summary of the Invention

It is an object of this invention to provide a fluid transportation network and a method for controlling the fluid transportation network, which fluid transportation network and method do not have at least some of the disadvantages of the prior art.

According to the present invention, these objects are achieved through the features of the independent claims. In addition, further advantageous embodiments follow from the dependent claims.

According to the present invention a fluid transportation network is proposed. The fluid transportation network comprises a plurality of parallel zones; a common supply line for feeding a total flow of fluid to the plurality of parallel zones, whereby each parallel zone is connected to the supply line and associated with a pump, the pump being configured to control a flow of fluid through the respective zone; at least one zone valve arranged in one of the zones and configured to control the flow of fluid through the zone; and a processing unit configured to control at least one of the pumps, associated with the zones, and/or the at least one zone valve, to control the flow of fluid through the zones, whereby the pumps are used to control the flow of fluid through a particular zone or plurality of zones only when a respective pump is operating within a specified efficient operating range of the respective pump, where the respective pump is regulating a flow of fluid above a respective flow threshold value of the respective pump.

It is pointed out here that while the term "pump" is used in connection with controlling the flow of fluid in the fluid transportation network, in case of a gaseous fluid, e.g. air, the pumps are implemented as motorized fans or ventilators. Likewise, while the term "valve" is used in connection with controlling the flow of fluid in the fluid transportation network, in case of a gaseous fluid, e.g. air, the valves are implemented as dampers.

In an embodiment, the processing unit is configured to control the respective pump to control the flow of fluid through a particular zone only when the flow setpoint for the particular zone is above the respective flow threshold value of the respective pump.

In an embodiment, the flow of a particular zone is controlled by the one pump associated with that particular zone, particularly by the pump arranged in that particular zone.

In an embodiment, at least one pump is configured to deliver flow in more than one zone, and the flow of these zones is controlled by an individual valve for each of these zones.

In an embodiment, only the zone valve of a particular zone is used to control the flow in the particular zone when the flow setpoint for the particular zone is below the respective flow threshold value.

In an embodiment, at least one of the zones comprises a flow sensor.

In an embodiment, the flow threshold value of at least one pump is in a range from 15% to 50% of a maximum flow of the respective pump. In an embodiment, the flow threshold value of each pump is in the range from 15% to 50% of the maximum flow of the respective pump.

In an embodiment, at least two parallel zones are connected through a connecting pipe, located between the pump and a thermal exchange unit of the respective zones, and the connecting pipe comprises a connecting valve.

In an embodiment, the connecting valve is associated with one of the zones and configured to control the flow in that one of the zones.

In an embodiment, the respective flow threshold value of the pump is a function of a threshold rotational speed of the pump or of a threshold rotational speed of the pump in relation to a pump pressure ratio.

In an embodiment, the fluid transportation network further comprises a main pump configured to provide the total flow of fluid.

In an embodiment, the processing unit comprises a plurality of separate processing units. In an embodiment, each of the zones comprises a zone processing unit. The zone processing units may be connected to a main processing unit.

Depending on the embodiment, the fluid is a liquid or gaseous fluid.

In an embodiment, each zone comprises one or more thermal exchange units.

A further aspect of the invention is related to a method of controlling a fluid transportation network. The proposed method comprises the steps of:
- supplying a total flow of fluid to a supply line;
- dividing the total flow of fluid into flow of fluids for each parallel zone;
- regulating the flow of fluids in each zone using a respective pump and/or a zone valve such that:
   a) the respective pump, alone or in combination with the zone valve, is used to control the flow in a particular zone only when the respective pump is operating within a specified efficient operating range of the respective pump, where the respective pump is regulating a flow of fluid above a respective flow threshold value of the respective pump; and
   b) only the zone valve is used to control the flow in the particular zone when the respective pump is operating outside the specified efficient operating range of the respective pump.

In an embodiment, the respective pump is used to control the flow of fluid through the particular zone only when the flow setpoint for the particular zone is above the respective flow threshold value of the respective pump.

In an embodiment of the method, in the case when only the zone valves are used to control the flow of fluid in the fluid transportation network, at least one of the zone valves is set to a completely open position by adjusting the speed of a main pump, arranged in the supply line, or the speed of one of the pumps associated with the zones.

### Brief Description of the Drawings

The present invention will be explained in more detail, by way of example, with reference to the drawings in which:
- Figure 1:: shows a block diagram illustrating schematically an example of a fluid transportation network, comprising a fluid transportation circuit and three parallel zones in accordance with the invention;
- Figure 2:: shows a block diagram illustrating schematically an example of a fluid transportation network, comprising a fluid transportation circuit, a main pump, and three parallel zones in accordance with the invention;
- Figures 3 and 4:: show block diagrams illustrating schematically examples of a fluid transportation network, comprising a fluid transportation circuit, a main pump, and three parallel zones, whereby two parallel zones are connected through a connecting pipe located between the pump and a thermal exchange unit of the respective zone in accordance with the invention.

### Detailed Description of Embodiments

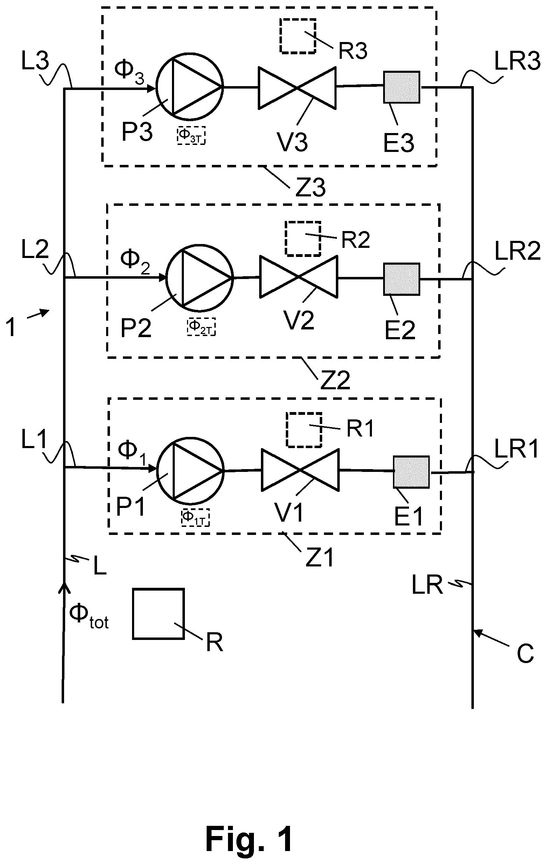

In Figures 1 to 4, reference numeral 1 refers to a fluid transportation network, e.g. a hydraulic or hydronic network, which comprises a plurality of parallel zones Z1, Z2 and Z3. For example, the fluid transportation network 1 is part of an HVAC system. The fluid transportation network 1 includes at least one fluid transportation circuit C, with fluid transportation lines L, L1, L2, L3, e.g. pipes, for transporting a liquid heat transportation medium, e.g. water or a water/glycol mixture. As illustrated schematically in Figures 1 to 4, each of the zones Z1, Z2, Z3 comprises thermal energy exchangers E1, E2, and E3, e.g. a heat exchanger for heating the zone Z1, Z2, Z3 or a cooling device for cooling the zones Z1, Z2, and Z3 or rooms associated with the zones Z1, Z2, Z3, respectively. It should be noted that the fluid transportation network 1 shown in Figures 1 to 4 is highly simplified and in actual configurations comprises more than three zones Z1, Z2 and Z3, and possibly more fluid transportation circuits C.

Each of the parallel zones Z1, Z2 and Z3 is connected to the supply line L, which is provided for feeding a total flow of fluid Φₜₒₜ to the plurality of parallel zones Z1, Z2, and Z3. Each of the parallel zones is connected to the supply line L trough a respective zone supply line L1, L2, L3 and a respective zone return line LR1, LR2 and LR3 (connected to the main return line LR) .

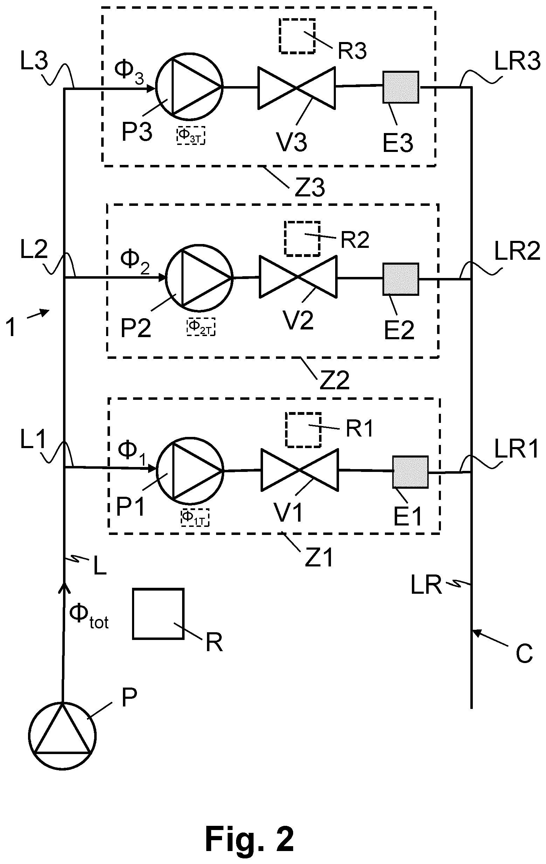

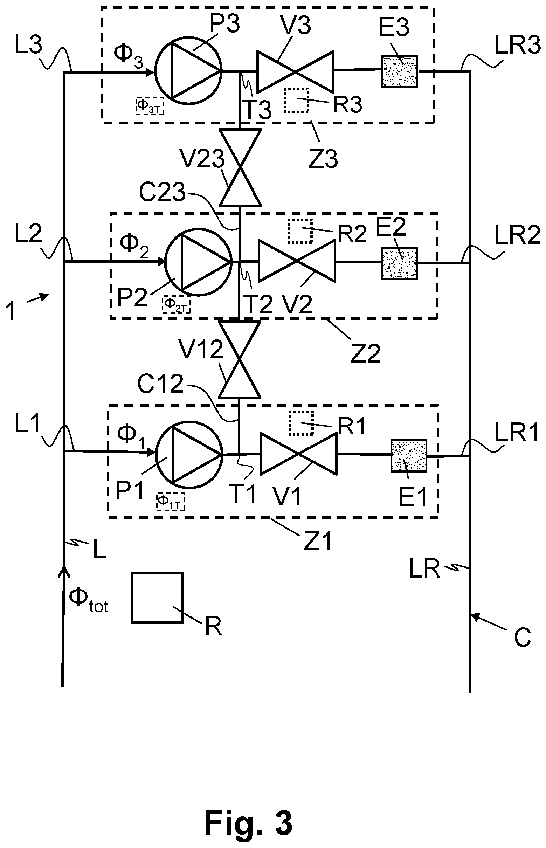

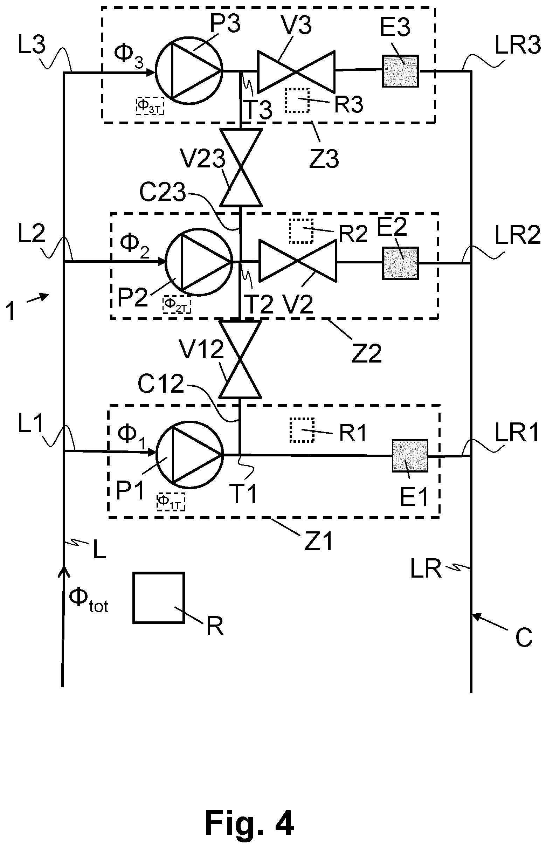

In Figures 1 to 4, each of the zones Z1, Z2, Z3 is associated with a pump P1, P2, P3 positioned and arranged in the respective zone Z1, Z2, Z3. In other embodiments, the number of pumps is lower than the number of zones Z1, Z2, Z3. In one embodiment there is only one pump arranged in the fluid transportation network 1. As illustrated in Figure 2, in further embodiments a main pump P is arranged in the (main) supply line L of the fluid transportation network 1. The main pump P is configured to provide the total flow of fluid Φₜₒₜ supplied to the plurality of parallel zones Z1, Z2, and Z3. Although not illustrated, it should be noted that a main pump P could also be added in the examples illustrated in Figures 3 and 4.

The pumps P1, P2, P3 are configured to control the flow of fluid Φ₁, Φ₂, Φ₃ through the respective zone Z1, Z2, Z3. In one embodiment the pumps P1, P2, P3 are centrifugal pumps, but any other kind of appropriate pump known in the art for the purpose of circulating fluids may be used. In a preferred embodiment, the pumps P1, P2, P3 are variable speed pumps where the speed of the pumps is controlled in each case using a variable speed motor with a variable frequency drive, for example. Parameters of the variable speed pumps are controlled using built-in controller(s) or external controller(s). In a preferred embodiment, the flow provided by the pump varies linearly with the pump speed.

In Figures 1-4, reference numerals Φ_{1T}, Φ_{2T}, Φ_{3T} refer to flow threshold values of the pumps P1, P2, P3 associated with the zones Z1, Z2, Z3. The flow threshold value Φ_{1T}, Φ_{2T}, Φ_{3T} of a particular pump P1, P2, P3 determines the efficient operating range of the particular pump P1, P2, P3. The person skilled in the art will understand that the flow threshold values of the pumps P1, P2, P3 may be defined by or correspond to the surge limit (or surge line) of the respective pump P1, P2, P3. For flow rates and corresponding flow setpoints above the pump's flow threshold value Φ_{1T}, Φ_{2T}, Φ_{3T}, the respective pump P1, P2, P3 operates within its efficient operating range, where it is capable of regulating efficiently and effectively the flow of fluid to the flow setpoint. For flow rates and corresponding flow setpoints at or below the pump's flow threshold value Φ_{1T}, Φ_{2T}, Φ_{3T}, the respective pump P1, P2, P3 operates outside its efficient operating range, where it is no longer capable of regulating efficiently and effectively the flow of fluid to the flow setpoint. Depending on the embodiment, the flow threshold values Φ_{1T}, Φ_{2T}, Φ_{3T} are each defined as a fixed value of a defined threshold flow rate, a threshold value determined as a ratio (percentage) of the pump's maximum flow rate, a function of a threshold rotational speed of the pump P1, P2, P3, and/or a function of a threshold speed of the pump in relation to a pump pressure ratio, e.g. the ratio of the discharge pressure to the suction pressure at the pump. Depending on the embodiment and/or configuration, the flow threshold values Φ_{1T}, Φ_{2T}, Φ_{3T} of each pump P1, P2, P3 is in a range from 15% to 50% of the maximum flow of the respective pump P1, P2, P3, preferably in a range 25% to 35% of the pump's maximum flow, e.g. at 30% of the pump's maximum flow. The flow threshold values Φ_{1T}, Φ_{2T}, Φ_{3T} are determined and/or stored by the processing unit(s) R, R1, R2, R3 associated with the respective pump(s) P1, P2, P3.

Referring further to the embodiments of Figures 1 and 2, each zone Z1, Z2, Z3 has one zone valve V1, V2, V3 arranged in the respective zone Z1, Z2, Z3 and configured to control the flow of fluid through the respective zone Z1, Z2, Z3 within the specified operating range of the pumps P1, P2, P3, as outlined above. In another embodiment according to the disclosed invention, the number of valves V1, V2, V3 is less than the number of zones Z1, Z2, Z3, e.g. some of the zones Z1, Z2, Z3 may comprise only a pump but not a corresponding valve.

Depending on the embodiment and/or configuration, the regulating zone valves V1, V2, V3, depicted schematically in Figures 1-4, are implemented as mechanical pressure independent valves, as electronic pressure independent valves (including individual flow sensors and controllers), and/or as several motorized valves which are connected to a common controller and a common flow sensor, for example. In an embodiment, the zone valves V1, V2, V3 are actuated by (electric) motors (not shown) for adjusting the orifice and, thus, the flow of the fluid through the zone valve V1, V2, V3.

The examples shown in Figures 3 and 4 illustrate embodiments or configurations of the fluid transportation network 1 where some of the parallel zones Z1, Z2, Z3 are connected via connecting pipes C12, C23. The connecting pipes C12, C23 are arranged between the pumps P1, P2, P3 and the thermal exchange units E1, E2, E3 of the respective parallel zones Z1, Z2, Z3. In other words, the connecting pipes C12, C23 interconnect junctions T1, T2, T3 in the piping of the parallel zones Z1, Z2, Z3, which junctions T1, T2, T3 are arranged between the pump P1, P2, P3 and the thermal exchange unit E1, E2, E3 of the respective parallel zone Z1, Z2, Z3, downstream of the pump P1, P2, P3 and upstream of the thermal exchange unit E1, E2, E3. In the examples of Figures 3 and 4, the parallel zones Z1 and Z2 are connected via connecting pipe C12, interconnecting the junctions T1 and T2; and the parallel zones Z2 and Z2 are connected via connecting pipe C23, interconnecting the junctions T2 and T3. As illustrated in Figures 3 and 4, regulating valves V12, V23 - referred to as connecting valves V12, V23 - are arranged in the respective connecting pipes C12, C23. Depending on the embodiment and/or configuration, the connecting valves V12, V23 are configured as unidirectional valves or as bidirectional valves. For instance, in a unidirectional valve configuration, in the examples of Figures 3 and 4, the connecting valve V12 may be arranged to control the flow of fluid from zone Z2 to zone Z1; likewise, the connecting valve V23 may be arranged to control the flow of fluid from zone Z2 to zone Z3. In scenarios where pumps P1 and P3 of the zones Z1 and Z3 are shut off, e.g. because they are operating outside their specified efficient operating range, the connecting valves V12, V23 may actually be configured and controlled to control the flow of fluid in the respective zone Z1, Z3. In the latter case, the pump P2 of zone Z2 would be configured and controlled to supply the flow of fluid to parallel zones Z1, Z2, and Z3. Thus, in cases where one pump P1, P2, P3 provides flow of fluid to more than one parallel zone Z1, Z2, Z3, the flow in these zones Z1, Z2, Z3 is controlled by a regulating valve V1, V2, V3, V12, V23 associated with these zones Z1, Z2, Z3.

As a difference to the exemplary configuration shown in Figure 3, Figure 4 illustrates an embodiment or configuration of the fluid transportation network 1 where the parallel zone Z1 is configured without a regulating zone valve arranged between its pump P1 and its thermal exchange unit E1. In this scenario, when pump P1 of Zone Z1 is operated within its specified efficient operating range, pump P1 is controlled to control the flow of fluid through zone 1 to the thermal exchange unit E1. Otherwise, when pump P1 of Zone Z1 is operated outside its specified efficient operating range, the connecting valve V12 is controlled to control the flow of fluid through zone 1 to the thermal exchange unit E1.

Although not illustrated, it should be pointed out that the fluid transportation network 1 comprises one or more flow sensors, e.g. ultrasonic flow sensors, arranged in at least one of the zones Z1, Z2, Z3 and configured to measure the current flow rate in the respective zone Z1 Z2, Z3. The measured current flow rate in a zone Z1, Z2, Z3 is used by the processing units R, R1, R2, R3, the pumps P1, P2, P3, and/or the regulating valves V1, V2, V3, V12, V23 to control the flow of fluid in the respective zone Z1, Z2, Z3 to the flow setpoint for the respective zone Z1, Z2, Z3.

It should be further noted, that in case of a gaseous fluid, e.g. air, the fluid transportation lines L, L1, L2, L3 are implemented as ducts, the zone valves V1, V2, V3 are implemented as dampers, and the pumps P1, P2, P3 are implemented as motorized fans or ventilators.

The fluid transportation network 1 according to the invention comprises one or more processing units R, R1, R2, R3. The processing units R, R1, R2, R3 may control the whole fluid transportation network 1, e.g. by a central processing unit R, or part of it, e.g. by individual distributed processing units R1, R2, R3. In Figures 1-4, the optional processing units R1, R2, R3 (indicated with dashed lines) are associated with the corresponding zones Z1, Z2, Z3, and configured to control the valves V1, V2, V3 and/or the pumps P1, P2, P3. In an embodiment, the individual processing units R1, R2, R3, are connected to and/or controlled by the central processing unit R. By controlling valves V1, V2, V3 and/or pumps P1, P2, P3, the processing units R, R1, R2, R3 are controlling the flow of fluid Φ₁, Φ₂, Φ₃ through the zones Z1, Z2, Z3. In some embodiments, the processing units R, R1, R2, and R3 are processing devices that each include an electronic circuit, e.g. a programmable processor, an application specific integrated circuit (ASIC), or another logic unit.

Some or all of the processing units R, R1, R2, R3 further comprise a communication module configured for wireless and/or wired data communication with external processing devices, e.g. another processing unit (or controller), a computerized processing unit operating as a fluid transportation network controller, or another computer or communication device, e.g. a cloud-based computer system, a mobile telephone, or a tablet computer, etc.

The processing units R, R1, R2, R3 are configured to control the pumps P1, P2, P3, zone valves V1, V2, V3, and connecting valves V12, V23 associated with the zones Z1, Z2, Z3 to control the flow of fluid Φ₁, Φ₂, Φ₃ through the respective zones Z1, Z2, Z3. The pumps P1, P2, P3 are only employed to control the flow of fluid Φ₁, Φ₂, Φ₃ - alone or in combination with a zone valve V1, V2, V3 - when the pumps P1, P2, P3 are operated within their specified efficient operating ranges. For example, the processing units R, R1, R2, R3 are configured to control a particular pump P1, P2, P3 associated with a particular zone Z1, Z2, Z3 to control the flow of fluid Φ₁, Φ₂, Φ₃ through the particular zone Z1, Z2, Z3 to a flow setpoint for the particular zone Z1, Z2, Z3, as long as the respective flow setpoint is above the flow threshold value Φ_{1T}, Φ_{2T}, Φ_{3T} of the particular pump P1, P2, P3 associated with the particular zone Z1, Z2, Z3. In an embodiment, the zone valve V1, V2, V3 of the particular zone Z1, Z2, Z3 is set and kept to a fully open position while the particular pump P1, P2, P3 associated with the particular zone Z1, Z2, Z3 controls the flow of fluid through the particular zone Z1, Z2, Z3 within the particular pump's specified efficient operating range. Thus, in the latter case, the flow of fluid Φ₁, Φ₂, Φ₃ through the particular zone Z1, Z2, Z3 is controlled entirely by the respective pump P1, P2, P2 operating in its specified efficient operating range.

The processing units R, R1, R2, R3 are further configured to pass regulating control from the pumps P1, P2, P3 associated with the zones Z1, Z2, Z3 to the zone valves V1, V2, V3 associated with the zones Z1, Z2, Z3 to control the flow of fluid Φ₁, Φ₂, Φ₃ through the respective zones Z1, Z2, Z3, outside the specified efficient operating range of the pumps P1, P2, P3. For example, the processing units R, R1, R2, R3 are configured to pass regulating control from a particular pump P1, P2, P3 associated with a particular zone Z1, Z2, Z3 to the particular zone valve V1, V2, V3 associated with the particular zone Z1, Z2, Z3, as long as the flow setpoint for the particular zone Z1, Z2, Z3 is at or below the flow threshold value Φ_{1T}, Φ_{2T}, Φ_{3T} of the particular pump P1, P2, P3 associated with the particular zone Z1, Z2, Z3. Depending on the type of zone valves V1, V2, V3, the processing units R, R1, R2, R3 are configured to control the zone valves V1, V2, V3 associated with the zones Z1, Z2, Z3 to control the flow of fluid Φ₁, Φ₂, Φ₃ through the respective zones Z1, Z2, Z3, outside the specified efficient operating range of the pumps P1, P2, P3, e.g. when the flow setpoints for the respective zones Z1, Z2, Z3 are at or below the flow threshold value Φ_{1T}, Φ_{2T}, Φ_{3T} of the pumps P1, P2, P3 associated with the respective zone Z1, Z2, Z3. In other words, in the latter case, the processing units R, R1, R2, R3 are configured to control a particular zone valve V1, V2, V3 associated with a particular zone Z1, Z2, Z3 to control the flow of fluid Φ₁, Φ₂, Φ₃ through the particular zone Z1, Z2, Z3, when the flow setpoint for the particular zone Z1, Z2, Z3 is at or below the flow threshold value Φ_{1T}, Φ_{2T}, Φ_{3T} of the particular pump P1, P2, P3 associated with the particular zone Z1, Z2, Z3. In an embodiment, the particular pump P1, P2, P3 associated with the particular zone Z1, Z2, Z3 is set and kept to a fixed pass through mode while the zone valve V1, V2, V3 associated with the particular zone Z1, Z2, Z3 controls the flow of fluid through the particular zone Z1, Z2, Z3, outside the specified efficient operating range of the particular pump P1, P2, P3. Thus, in the latter case, the flow of fluid Φ₁, Φ₂, Φ₃ through the particular zone Z1, Z2, Z3 is controlled entirely by the respective zone valve V1, V2, V3. In cases and scenarios when only the zone valves V1, V2, V3 are used to control the flow of fluid in the fluid transportation network 1, the processing units R, R1, R2, R3 are further configured to set to a fully open position the zone valve V1, V2, V3 which already has the greatest valve position, i.e. the zone valve V1, V2, V3 with the greatest orifice closest to a fully open position, by adjusting the speed of the main pump P, arranged in the supply line L, or the speed of one of the pumps P1, P2, P3 associated with the zones Z1, Z2, Z3.

In further embodiments, the fluid transportation network 1 further comprises one or more non-return valves, arranged in each case downstream of a pump P, P1, P2, P3. In the configurations with a main pump P, the non-return valve is arranged in the main supply line L downstream of the main pump P, directly "behind" the main pump P (without any intervening flow controlling parts or components). In an embodiment, the main pump P is controlled to overpressure the flow, e.g. by 20 kpa, consequently, the individual pumps P1, P2, P3 in the zones Z1, Z2, Z3 can be switched off in cases where only a low flow is required in the respective zone Z1, Z2, Z3, e.g. 20% of maximum flow, and the main pump P is sufficient to provide the required flow or pressure, respectively. For the pumps P1, P2, P3 arranged in and associated with a zone Z1, Z2, Z3, the non-return valves are arranged in each case downstream of the pump P1, P2, P3, upstream of the junction where the respective zone Z1, Z2, Z3 reconnects to the main return line LR.

## Claims

1. A fluid transportation network (1) comprising:
a plurality of parallel zones (Z1, Z2, Z3);
a common supply line (L) for feeding a total flow of fluid (Φₜₒₜ) to the plurality of parallel zones (Z1, Z2, Z3), whereby each parallel zone (Z1, Z2, Z3) is connected to the supply line (L) and associated with a pump (P1, P2, P3), the pump (P1, P2, P3) being configured to control a flow of fluid (Φ₁, Φ₂, Φ₃) through the respective zone (Z1, Z2, Z3);
at least one zone valve (V1, V2, V3, V12, V23) arranged in one of the zones (Z1, Z2, Z3) and configured to control the flow of fluid through the zone (Z1, Z2, Z3); and
a processing unit (R, R1, R2, R3) configured to control at least one of the pumps (P1, P2, P3), associated with the zones (Z1, Z2, Z3), and/or the at least one zone valve (V1, V2, V3, V12, V23), to control the flow of fluid (Φ₁, Φ₂, Φ₃) through the zones (Z1, Z2, Z3), **characterised in that** the pumps (P1, P2, P3) are used to control the flow of fluid through a particular zone or plurality of zones (Z1, Z2, Z3) only when a respective pump (P1, P2, P3) is operating within a specified efficient operating range of the respective pump (P1, P2, P3), where the respective pump (P1, P2, P3) is regulating a flow of fluid (Φ₁, Φ₂, Φ₃) above a respective flow threshold value (Φ_{1T}, Φ_{2T}, Φ_{3T}) of the respective pump (P1, P2, P3).

2. The fluid transportation network (1) of claim 1, wherein the processing unit (R, R1, R2, R3) is configured to control the respective pump (P1, P2, P3) to control the flow of fluid through a particular zone (Z1, Z2, Z3) only when the flow setpoint for the particular zone (Z1, Z2, Z3) is above the respective flow threshold value (Φ_{1T}, Φ_{2T}, Φ_{3T}) of the respective pump (P1, P2, P3).

3. The fluid transportation network (1) of one of claims 1 or 2, wherein the flow of a particular zone (Z1, Z2, Z3) is controlled by the one pump (P1, P2, P3) associated with that particular zone (Z1, Z2, Z3), particularly by the pump (P1, P2, P3) arranged in that particular zone (Z1, Z2, Z3).

4. The fluid transportation network (1) of one of claims 1 to 3, wherein at least one pump (P2, P) is configured to deliver flow in more than one zone (Z1, Z2), and the flow of these zones (Z1, Z2) is controlled by an individual valve (V1, V2, V12, V23) for each of these zones (Z1, Z2, Z3).

5. A fluid transportation network (1) of one of claims 1 to 4, wherein only the zone valve (V1, V2, V3) of a particular zone (Z1, Z2, Z3) is used to control the flow in the particular zone (Z1, Z2, Z3) when the flow setpoint for the particular zone (Z1, Z2, Z3) is at or below the respective flow threshold value (Φ_{1T}, Φ_{2T}, Φ_{3T}).

6. The fluid transportation network (1) of one of claims 1 to 5, wherein at least one of the zones (Z1, Z2, Z3) comprises a flow sensor.

7. The fluid transportation network (1) of one of claims 1 to 6, wherein the flow threshold value (Φ_{1T}, Φ_{2T}, Φ_{3T}) of at least one pump is in a range from 15% to 50% of a maximum flow of the respective pump (P1, P2, P3).

8. The fluid transportation network (1) of one of claims 1 to 7, wherein at least two parallel zones (Z1, Z2) are connected through a connecting pipe, located between the pump and a thermal exchange unit (E1, E2, E3) of the respective zones, and the connecting pipe comprises a connecting valve (V12, V23).

9. The fluid transportation network (1) of claim 8, wherein the connecting valve (V12, V23) is associated with one of the zones (Z1, Z3) and configured to control the flow in that one of the zones (Z1, Z3).

10. The fluid transportation network (1) of one of claims 1 to 9, wherein the respective flow threshold value (Φ_{1T}, Φ_{2T}, Φ_{3T}) of the pump (P1, P2, P3) is a function of a threshold rotational speed of the pump (P1, P2, P3) or of a threshold rotational speed of the pump in relation to a pump pressure ratio.

11. The fluid transportation network (1) of one of claims 1 to 10, further comprising a main pump (P) configured to provide the total flow of fluid (Φₜₒₜ).

12. The fluid transportation network (1) of one of claims 1 to 11, wherein the processing unit (R) comprises a plurality of separate processing units, and/or wherein each of the zones (Z1, Z2, Z3) comprises a zone processing unit (R1, R2, R3).

13. A method of controlling a fluid transportation network (1) of any of claims 1 to 12, the method comprising the steps of:
- supplying a total flow of fluid (Φₜₒₜ) to a supply line (L);
- dividing the total flow of fluid (Φₜₒₜ) into flow of fluids (Φ₁, Φ₂, Φ₃) for each parallel zone (Z1, Z2, Z3);
- regulating the flow of fluids in each zone using a respective pump (P1, P2, P3) and/or a zone valve (V1, V2, V3) such that:
a) the respective pump (P1, P2, P3), alone or in combination with the zone valve (V1, V2, V3), is used to control the flow in a particular zone only when the respective pump (P1, P2, P3) is operating within a specified efficient operating range of the respective pump (P1, P2, P3), where the respective pump (P1, P2, P3) is regulating a flow of fluid (Φ₁, Φ₂, Φ₃) above a respective flow threshold value (Φ_{1T}, Φ_{2T}, Φ_{3T}) of the respective pump (P1, P2, P3); and
b) only the zone valve is used to control the flow in the particular zone when the respective pump (P1, P2, P3) is operating outside the specified efficient operating range of the respective pump (P1, P2, P3).

14. The method of claim 13, wherein the respective pump (P1, P2, P3) is used to control the flow of fluid through the particular zone (Z1, Z2, Z3) only when the flow setpoint for the particular zone (Z1, Z2, Z3) is above the respective flow threshold value (Φ_{1T}, Φ_{2T}, Φ_{3T}) of the respective pump (P1, P2, P3).

15. The method of one of claims 13 or 14, wherein in a case when only the zone valves (V1, V2, V3) are used to control the flow of fluid in the fluid transportation network (1), at least one of the zone valves (V1, V2, V3) is set to a completely open position by adjusting a speed of a main pump (P), arranged in the supply line (L), or the speed of one of the pumps (P1, P2, P3) associated with the zones (Z1, Z2, Z3).

## Patentansprüche

1. Fluidtransportnetzwerk (1), umfassend:
eine Vielzahl von parallelen Zonen (Z1, Z2, Z3);
eine gemeinsame Versorgungsleitung (L) zum Zuführen eines gesamten Fluiddurchflusses (Φₜₒₜ) zu der Vielzahl paralleler Zonen (Z1, Z2, Z3), wobei jede parallele Zone (Z1, Z2, Z3) mit der Versorgungsleitung (L) verbunden und einer Pumpe (P1, P2, P3) zugeordnet ist, wobei die Pumpe (P1, P2, P3) dazu ausgelegt ist, einen Fluiddurchfluss (Φ₁, Φ₂, Φ₃) durch die jeweilige Zone (Z1, Z2, Z3) zu steuern;
mindestens ein Zonenventil (V1, V2, V3, V12, V23), das in einer der Zonen (Z1, Z2, Z3) angeordnet und dazu eingerichtet ist, den Fluiddurchfluss durch die Zone (Z1, Z2, Z3) zu kontrollieren; und
eine Prozessoreinheit (R, R1, R2, R3), die dazu ausgelegt ist, mindestens eine der Pumpen (P1, P2, P3), die mit den Zonen (Z1, Z2, Z3) verbunden sind, und/oder das mindestens eine Zonenventil (V1, V2, V3, V12, V23) zu steuern, um den Fluiddurchfluss (Φ₁, Φ₂, Φ₃) durch die Zonen (Z1, Z2, Z3) zu steuern,
**dadurch gekennzeichnet, dass** die Pumpen (P1, P2, P3) zur Kontrolle des Fluiddurchflusses durch eine bestimmte Zone oder eine Mehrzahl von Zonen (Z1, Z2, Z3) nur dann verwendet werden, wenn eine jeweilige Pumpe (P1, P2, P3) innerhalb eines bestimmten effizienten Arbeitsbereichs der jeweiligen Pumpe (P1, P2, P3) arbeitet, wobei die jeweilige Pumpe (P1, P2, P3) einen Fluiddurchfluss (Φ₁, Φ₂, Φ₃) oberhalb eines jeweiligen Durchflussschwellenwertes (Φ_{1T}, Φ_{2T}, Φ_{3T}) der jeweiligen Pumpe (P1, P2, P3) reguliert.

2. Fluidtransportnetzwerk (1) nach Anspruch 1, wobei die Prozessoreinheit (R, R1, R2, R3) dazu ausgelegt ist, die jeweilige Pumpe (P1, P2, P3) zu steuern, um den Fluiddurchfluss durch eine bestimmte Zone (Z1, Z2, Z3) nur dann zu steuern, wenn der Durchflusssollwert für die jeweilige Zone (Z1, Z2, Z3) über dem jeweiligen Durchflussschwellenwert (Φ_{1T}, Φ_{2T}, Φ_{3T}) der jeweiligen Pumpe (P1, P2, P3) liegt.

3. Fluidtransportnetzwerk (1) nach einem der Ansprüche 1 oder 2, wobei der Fluiddurchfluss einer bestimmten Zone (Z1, Z2, Z3) durch die eine Pumpe (P1, P2, P3) gesteuert wird, die dieser bestimmten Zone (Z1, Z2, Z3) zugeordnet ist, insbesondere durch die Pumpe (P1, P2, P3), die in dieser bestimmten Zone (Z1, Z2, Z3) angeordnet ist.

4. Fluidtransportnetzwerk (1) nach einem der Ansprüche 1 bis 3, wobei mindestens eine Pumpe (P2, P) dazu ausgelegt ist, einen Fluiddurchfluss in mehr als eine Zone (Z1, Z2) zu liefern, und der Durchfluss dieser Zonen (Z1, Z2) durch ein individuelles Ventil (V1, V2, V12, V23) für jede dieser Zonen (Z1, Z2, Z3) gesteuert wird.

5. Fluidtransportnetzwerk (1) nach einem der Ansprüche 1 bis 4, wobei nur das Zonenventil (V1, V2, V3) einer bestimmten Zone (Z1, Z2, Z3) zur Kontrolle des Durchflusses in der bestimmten Zone (Z1, Z2, Z3) verwendet wird, wenn der Durchflusssollwert für die bestimmte Zone (Z1, Z2, Z3) bei oder unter dem jeweiligen Durchflussschwellenwert (Φ_{1T}, Φ_{2T}, Φ_{3T}) liegt.

6. Fluidtransportnetzwerk (1) nach einem der Ansprüche 1 bis 5, wobei mindestens eine der Zonen (Z1, Z2, Z3) einen Durchflusssensor umfasst.

7. Fluidtransportnetzwerk (1) nach einem der Ansprüche 1 bis 6, wobei der Durchflussschwellenwert (Φ_{1T}, Φ_{2T}, Φ_{3T}) von mindestens einer Pumpe in einem Bereich von 15% bis 50% eines maximalen Durchflusses der jeweiligen Pumpe (P1, P2, P3) liegt.

8. Fluidtransportnetzwerk (1) nach einem der Ansprüche 1 bis 7, wobei mindestens zwei parallele Zonen (Z1, Z2) durch eine Verbindungsleitung verbunden sind, die sich zwischen der Pumpe und einer Wärmetauschereinheit (E1, E2, E3) der jeweiligen Zonen befindet, und die Verbindungsleitung ein Verbindungsventil (V12, V23) umfasst.

9. Fluidtransportnetzwerk (1) nach Anspruch 8, wobei das Verbindungsventil (V12, V23) einer der Zonen (Z1, Z3) zugeordnet ist und dazu ausgelegt ist, den Fluiddurchfluss in dieser einen der Zonen (Z1, Z3) zu steuern.

10. Fluidtransportnetzwerk (1) nach einem der Ansprüche 1 bis 9, wobei der jeweilige Durchflussschwellenwert (Φ_{1T}, Φ_{2T}, Φ_{3T}) der Pumpe (P1, P2, P3) eine Funktion einer Schwellendrehzahl der Pumpe (P1, P2, P3) oder einer Schwellendrehzahl der Pumpe in Verbindung zu einem Pumpendruckverhältnis ist.

11. Fluidtransportnetzwerk (1) nach einem der Ansprüche 1 bis 10 ferner umfassend eine Hauptpumpe (P), die dazu ausgelegt ist, den gesamten Fluiddurchfluss (Φₜₒₜ) bereitzustellen.

12. Fluidtransportnetzwerk (1) nach einem der Ansprüche 1 bis 11, wobei die Prozessoreinheit (R) eine Vielzahl von separaten Prozessoreinheiten umfasst und/oder wobei jede der Zonen (Z1, Z2, Z3) eine Zonenprozessoreinheit (R1, R2, R3) umfasst.

13. Verfahren zur Steuerung eines Fluidtransportnetzwerks (1) nach einem der Ansprüche 1 bis 12, wobei das Verfahren die folgenden Schritte umfasst:
- Zuführen eines gesamten Fluiddurchflusses (Φₜₒₜ) zu einer Versorgungsleitung (L);
- Aufteilen des gesamten Fluiddurchflusses (Φₜₒₜ) in Fluiddurchflüsse (Φ₁, Φ₂, Φ₃) für jede parallele Zone (Z1, Z2, Z3);
- Regelung des Fluiddurchflusses in jeder Zone unter Verwendung einer entsprechenden Pumpe (P1, P2, P3) und/oder eines Zonenventils (V1, V2, V3), sodass:
a) die jeweilige Pumpe (P1, P2, P3), allein oder in Kombination mit dem Zonenventil (V1, V2, V3), zur Kontrolle des Durchflusses in einer bestimmten Zone nur dann verwendet wird, wenn die jeweilige Pumpe (P1, P2, P3) innerhalb eines bestimmten effizienten Arbeitsbereichs der jeweiligen Pumpe (P1, P2, P3) arbeitet, wobei die jeweilige Pumpe (P1, P2, P3) einen Fluiddurchfluss (Φ₁, Φ₂, Φ₃) oberhalb eines jeweiligen Durchflussschwellenwertes (Φ_{1T}, Φ_{2T}, Φ_{3T}) der jeweiligen Pumpe (P1, P2, P3) regelt; und
b) nur das Zonenventil zur Kontrolle des Durchflusses in der jeweiligen Zone verwendet wird, wenn die jeweilige Pumpe (P1, P2, P3) außerhalb des spezifizierten effizienten Arbeitsbereichs der jeweiligen Pumpe (P1, P2, P3) arbeitet.

14. Verfahren nach Anspruch 13, wobei die jeweilige Pumpe (P1, P2, P3) nur dann zur Kontrolle des Fluiddurchflusses durch die bestimmte Zone (Z1, Z2, Z3) verwendet wird, wenn der Durchflusssollwert für die bestimmte Zone (Z1, Z2, Z3) über dem jeweiligen Durchflussschwellenwert (Φ_{1T}, Φ_{2T}, Φ_{3T}) der jeweiligen Pumpe (P1, P2, P3) liegt.

15. Verfahren nach einem der Ansprüche 13 oder 14, wobei in einem Fall, in dem nur die Zonenventile (V1, V2, V3) zur Steuerung des Fluiddurchflusses in dem Fluidtransportnetzwerk (1) verwendet werden, mindestens eines der Zonenventile (V1, V2, V3) in eine vollständig geöffnete Position gebracht wird, indem die Geschwindigkeit einer in der Versorgungsleitung (L) angeordneten Hauptpumpe (P) oder die Geschwindigkeit einer der Pumpen (P1, P2, P3), die den Zonen (Z1, Z2, Z3) angeordnet sind, eingestellt wird.

## Revendications

1. Réseau de transport de fluide (1) comprenant :
une pluralité de zones parallèles (Z1, Z2, Z3) ;
une conduite d'alimentation commune (L) pour alimenter un débit total de fluide (Φₜₒₜ) vers la pluralité de zones parallèles (Z1, Z2, Z3), chaque zone parallèle (Z1, Z2, Z3) est reliée à la conduite d'alimentation (L) et associée à une pompe (P1, P2, P3), la pompe (P1, P2, P3) étant configurée pour contrôler un débit de fluide (Φ₁, Φ₂, Φ₃) à travers la zone respective (Z1, Z2, Z3);
au moins une vanne de zone (V1, V2, V3, V12, V23) disposée dans l'une des zones (Z1, Z2, Z3) et configurée pour contrôler le débit de fluide à travers la zone (Z1, Z2, Z3); et
une unité de traitement (R, R1, R2, R3) configurée pour commander au moins une des pompes (P1, P2, P3), associées aux zones (Z1, Z2, Z3), et/ou l'au moins une vanne de zone (V1, V2, V3, V12, V23), pour contrôler le débit de fluide (Φ₁, Φ₂, Φ₃) à travers les zones (Z1, Z2, Z3),
**caractérisé en ce que** les pompes (P1, P2, P3) sont utilisées pour contrôler le débit de fluide à travers une zone particulière ou une pluralité de zones (Z1, Z2, Z3) uniquement lorsqu'une pompe respective (P1, P2, P3) fonctionne dans une plage de fonctionnement efficace spécifiée de la pompe respective (P1, P2, P3), où la pompe respective (P1, P2, P3) régule un débit de fluide (Φ₁, Φ₂, Φ₃) au-dessus d'une valeur seuil de débit respective (Φ_{1T}, Φ_{2T}, Φ_{3T}) de la pompe respective (P1, P2, P3).

2. Réseau transport de fluide (1) de la revendication 1, dans lequel l'unité de traitement (R, R1, R2, R3) est configurée pour commander la pompe respective (P1, P2, P3) afin de contrôler le débit de fluide à travers une zone particulière (Z1, Z2, Z3) uniquement lorsque le point de consigne de débit pour la zone particulière (Z1, Z2, Z3) est supérieur à la valeur seuil de débit respective (Φ_{1T}, Φ_{2T}, Φ_{3T}) de la pompe respective (P1, P2, P3).

3. Réseau de transport de fluide (1) de l'une des revendications 1 ou 2, dans lequel le débit d'une zone particulière (Z1, Z2, Z3) est contrôlé par la seule pompe (P1, P2, P3) associée à cette zone particulière (Z1, Z2, Z3), en particulier par la pompe (P1, P2, P3) agencée dans cette zone particulière (Z1, Z2, Z3).

4. Réseau de transport fluide (1) de l'une des revendications 1 à 3, dans lequel au moins une pompe (P2, P) est configurée pour délivrer un débit dans plusieurs zones (Z1, Z2), et le débit de ces zones (Z1, Z2) est contrôlé par une vanne individuelle (V1, V2, V12, V23) pour chacune de ces zones (Z1, Z2, Z3).

5. Réseau detransport defluide (1) de l'une des revendications 1 à 4, dans lequel seule la vanne de zone (V1, V2, V3) d'une zone particulière (Z1, Z2, Z3) est utilisée pour contrôler le débit dans la zone particulière (Z1, Z2, Z3) lorsque le point de consigne de débit pour la zone particulière (Z1, Z2, Z3) est égal ou inférieur à la valeur seuil de débit respective (Φ_{1T}, Φ_{2T}, Φ_{3T}).

6. Réseau de transport de fluide (1) de l'une des revendications 1 à 5, dans lequel au moins une des zones (Z1, Z2, Z3) comprend un capteur de débit.

7. Réseau de transport de fluide (1) de l'une des revendications 1 à 6, dans lequel la valeur seuil de débit (Φ_{1T}, Φ_{2T}, Φ_{3T}) d'au moins une pompe est comprise dans un domaine allant de 15% à 50% d'un débit maximal de la pompe respective (P1, P2, P3).

8. Réseau de transport de fluide (1) de l'une des revendications 1 à 7, dans lequel au moins deux zones parallèles (Z1, Z2) sont reliées par une conduite de raccordement, située entre la pompe et une unité d'échange thermique (E1, E2, E3) des zones respectives, et la conduite de raccordement comprend une vanne de raccordement (V12, V23).

9. Réseau de transport de fluide (1) de la revendication 8, dans lequel la vanne de raccordement (V12, V23) est associée à l'une des zones (Z1 , Z3) et configurée pour contrôler le débit dans cette zone (Z1, Z3).

10. Réseau de transport de fluide (1) de l'une des revendications 1 à 9, dans lequel la valeur seuil de débit respective (Φ_{1T}, Φ_{2T}, Φ_{3T}) de la pompe (P1 , P2, P3) est fonction d'une vitesse seuil de rotation de la pompe (P1 , P2, P3) ou d'une vitesse seuil de rotation de la pompe en fonction d'un rapport de pression de la pompe.

11. Réseau transport de fluide (1) de l'une des revendications 1 à 10, comprenant en outre une pompe principale (P) configurée pour fournir le débit total de fluide (Φₜₒₜ).

12. Réseau transport fluide (1) de l'une des revendications 1 à 11, dans lequel l'unité de traitement (R) comprend une pluralité d'unités de traitement distinctes, et/ou dans lequel chacune des zones (Z1, Z2, Z3) comprend une unité de traitement de zone (R1, R2, R3).

13. Procédé de commande d'un réseau transport fluide (1) de l'une quelconque des revendications 1 à 12, le procédé comprenant les étapes de :
- fournir un débit total de fluide (Φₜₒₜ) à une conduite d'alimentation (L) ;
- diviser le débit total de fluide (Φₜₒₜ) en débit de fluide (Φ₁, Φ₂, Φ₃) pour chaque zone parallèle (Z1, Z2, Z3) ;
- réguler le débit de fluides dans chaque zone à l'aide d'une pompe respective (P1 , P2, P3) et/ou d'une vanne de zone (V1, V2, V3) de telle sorte que :
a) la pompe respective (P1, P2, P3), seule ou en combinaison avec la vanne de zone (V1, V2, V3), soit utilisée pour réguler le débit dans une zone particulière uniquement lorsque la pompe respective (P1, P2, P3) fonctionne dans une plage de fonctionnement efficace spécifiée de la pompe respective (P1, P2, P3), où la pompe respective (P1, P2, P3) régule un débit de fluide (Φ₁, Φ₂, Φ₃) au-dessus d'une valeur seuil de débit respective (Φ_{1T}, Φ_{2T}, Φ_{3T}) de la pompe respective (P1, P2, P3) ; et
b) seule la vanne de zone est utilisée pour contrôler le débit dans la zone particulière lorsque la pompe respective (P1, P2, P3) fonctionne en dehors de la plage de fonctionnement efficace spécifiée de la pompe respective (P1, P2, P3).

14. Le procédé de la revendication 13, dans lequel la pompe respective (P1, P2, P3) est utilisée pour contrôler le débit de fluide à travers la zone particulière (Z1, Z2, Z3) uniquement lorsque le point de consigne de débit pour la zone particulière (Z1, Z2, Z3) est supérieur à la valeur seuil de débit respective (Φ_{1T}, Φ_{2T}, Φ_{3T}) de la pompe respective (P1, P2, P3).

15. Le procédé de l'une des revendications 13 ou 14, dans lequel, dans le cas où seules les vannes de zone (V1, V2, V3) sont utilisées pour contrôler le débit de fluide dans le réseau transport de fluide (1), au moins une des vannes de zone (V1, V2, V3) est mise en position complètement ouverte en ajustant une vitesse d'une pompe principale (P), disposée dans la conduite d'alimentation (L), ou la vitesse d'une des pompes (P1, P2, P3) associées aux zones (Z1, Z2, Z3).
